# EUROPÄISCHE PATENTANMELDUNG

(11) **EP 0 715 159 A2**
(43) Veröffentlichungstag der Anmeldung: **05.06.1996**
(21) Anmeldenummer: 95810727.8
(22) Anmeldetag: 21.11.1995
(51) Int. Cl.: G01L 23/10, G01L 23/24

(54) **Drucksensor für flüssige oder gasförmige Medien**

(30) Priorität: 02.12.1994 CH 3640/94
(71) Anmelder: K.K. HOLDING AG, CH-8408 Winterthur (CH)
(72) Erfinder: Engeler, Paul, CH-8500 Frauenfeld (CH); Sonderegger, Christoph, CH-8413 Neftenbach (CH)

(57) **Zusammenfassung**

Der erfindungsgemässe Drucksensor (10), insbesondere für Überwachungs-Anordnungen von Brennkraftmaschinen, bezweckt die kontinuierliche Einhaltung optimaler Leistungsumsetzung der Brennstoffe unter möglichst sicheren und langfristigen Betriebsverhältnissen. Ideale Kontrollparameter dazu bieten die Messung des Verbrennungsdrucks eines jeden Zylinders und des Einspritzdrucks des flüssigen oder gasförmigen Brennstoffs. Dazu wird ein neuer Drucksensor (10) vorgeschlagen, der in der Folge als C-Form Sensor beschrieben wird. Er ist gekennzeichnet durch eine Scheibe (12) mit Druckmessbohrung (13) für das Messmedium und eine im Winkel von 90° dazu angeordnete Dehnmessbohrung (14) für das Messelement sowie einem Sekantenabschnitt (17), welche die C-Form definiert.

Je nach Ausgestaltung kann der erfindungsgemässe C-Form Drucksensor (10) für heisse Verbrennungsgase wie auch für Brenn- und andere flüssige oder gasförmige Stoffe verwendet werden. In der Anwendung für Brennkraftmaschinen-Überwachung entstehen ganz besondere Vorteile, indem der C-Form Drucksensor (10) **zwischen** Brennraum und Indizierventil (15), statt **nach** dem Indizierventil (15) montiert werden kann, wodurch periodisches Durchblasen und damit Entfernung aller Verbrennungsrückstände ermöglicht wird. Zudem kann jederzeit eine Kalibriermessung, ohne jeden Betriebsunterbruch durchgeführt werden. Das C-Form Sensorkonzept ermöglich damit erstmals eine zuverlässig messende Überwachungs-Anordnung für Brennkraftmaschinen, die jederzeit ohne Betriebsunterbruch überprüft werden kann.

## Beschreibung

Aus der EP-B-283 524 sind ein Verfahren und eine Anordnung zur Messung des Innendruckes in rohrförmigen Körpern bekannt; bei dieser bekannten Anordnung werden zur Ermittlung des genannten Druckes zwei elektronische Summations- oder Subtraktionsschaltungen benötigt. Dieser bedingt einen relative hohen apparativen Aufwand.

Weiterhin ist heute bei Brennkraftmaschinen, wie Diesel- oder Gasmotoren, zur Einhaltung von Emissions-Vorschriften, Sicherung vor Umweltschäden und Gewährleistung ökonomischer Betriebsdaten die Dauerüberwachung der Verbrennungsvorgänge in jedem Zylinder zur Bedingung geworden. Gleichzeitig wird die Leistungsabgabe eines jeden Zylinders zunehmend in die Überwachungsparameter übernommen, ebenso die Überwachung der Einspritzvorgänge. Der Druck der Versicherungsgesellschaften wird in Zukunft wesentlich erhöhte Anforderungen an Schiffsbetriebe stellen, indem die Überwachungsdaten dokumentierbar vorliegen müssen.

Die Zylinderdruckmessung in der Motorenforschung wird seit Jahrzehnten mit Zylinderdrucksensoren, die möglichst nahe an den Brennraum montiert werden, durchgeführt. Dazu werden fast ausschliesslich piezoelektrische Membran-Sensoren verwendet, deren Membranpartien hohen Flammentemperaturen ausgesetzt sind. Entsprechend ist deren Lebensdauer begrenzt.

Für Überwachungszwecke sind daher Sensoren gefordert, die mindestens eine volle Betriebsperiode eines Motors bis zur nächsten Grossrevision überstehen und in dieser Zeit eine optimale Repetitionsgenauigkeit aufweisen.

Bis heute existieren keine Sensoren, welche diese Anforderungen befriedigend erfüllen. Die heute auf dem Markt angebotenen Überwachungs-Drucksensoren sind auf dem Membranprinzip aufgebaut, wobei extra dicke Membranplatten verwendet werden, um Brüche vermeiden zu können. Diese verstärkten Plattenmembranen sind jedoch sehr temperaturempfindlich. Im Laufe des Betriebes verkrusten ihre Oberflächen mit Kohlerückständen, wodurch sich Fehlmessungen ergeben, die immer grösser werden. Zudem neigen zu dicke Plattenmembranen zu Ermüdungsrissen, die erst nach tausenden von Betriebsstunden auftreten können. In Erkenntnis dieser Probleme schlagen die Hersteller solcher Sensoren heute vor, dieselben nicht direkt im Zylinderdeckel, sondern erst **nach** dem Indikatorhahn anzubauen. Damit können einzelne Sensoren bei allfälligen Fehlanzeigen mechanisch abgeschaltet und durch einen Reservesensor ersetzt werden. Mit diesen Vorsichtsmassnahmen arbeiten die heutigen Sensorhersteller für Überwachungs-Anordnungen, was verständlich ist.

Dieser Nachteil, dass für jede Überwachungs-Anordnung eine Reihe von Reservesensoren bereitstehen muss, soll durch die erfindungsgemässe Anordnung ebenso behoben werden, wie der relativ hohe Aufwand für die geschilderte Messung des Innendruckes von rohrförmigen Körpern allgemein.

Grundlage der Erfindung ist ein neues C-Form-Prinzip, das für die indirekte Druckmessung von Verbrennungsgasen wie auch flüssiger oder gasförmiger Stoffe geeignet ist. Der C-Form Sensor in Grundform einer Scheibe weist eine zentrale Durchgangsöffnung für die Messmaterie sowie eine Tangentialbohrung für das Messelement auf und hat parallel zur Tangentialbohrung einen sekantenförmigen Abschluss. Die dadurch entstehende C-Form ist einseitig von höherer Elastizität, welche in der Tangential-Messbohrung ausgeprägt ist und zur Signalerzeugung mittels Dehnmesselement verwendet wird. Die Signalabführung des Dehnmesselements kann axial oder radial erfolgen.

Für heisse und/oder aggressive Gase, wie Verbrennungsgase, kann der C-Form Sensor mit einer rohrförmigen Auskleidung versehen sein, die in die Zentralbohrung eingesetzt ist und als Thermo- und/oder Korrosionsschutz dient; die Auskleidung kann ein- oder mehrteilig sein.

Der C-Form Sensor funktioniert sowohl im Durchfluss oder mit Sackloch. Für die Verbrennungsdruckmessung wird vorwiegend die Durchfluss-Variante gewählt. Für Einspritzöl- oder Gasbrennstoff wird auch die Sacklochvariante genutzt.

Für die Zylinderdruckmessung ergibt die C-Form interessante neue Einbau-Anordnungen. Damit kann der C-Form Sensor am Beispiel der Überwachungsanordnung, im Gegensatz zum Stand der Technik, nicht **nach** einem mechanischen Absperrventil, sondern zwischen Absperrventil und Motorraum montiert werden. Zweck dieser Anordnung ist die periodische Durchspülmöglichkeit der Zentralbohrung, was durch kurzes Öffnen des Absperrventils bewirkt wird. Durch diese kurzzeitige Durchspülung wird die Oberfläche der Auskleidung von allen Rückständen befreit, die ausgeblasen werden, wodurch sich die Messgenauigkeit periodisch immer wieder stabilisieren lässt. Im Gegensatz zu einer Plattenmembran ist die Auskleidung im Aussendurchmesser vollauf unterstützt, wodurch sich keine Biegebeanspruchungen ergeben. Damit ist die Betriebsdauer eines erfindungsgemässen C-Form Sensors ein Mehrfaches eines Sensors mit Plattenmembran. Das Prinzip des C-Form Sensors und dessen vorzugsweise Anordnung zwischen Brennraum und Absperrventil, mit der Durchspülmöglichkeit, bringt damit eine Überwachungsanordnung, die ohne Reservesensoren auskommt und eine bisher unerreichte Repetiergenauigkeit erreicht. Die Erfindung ermöglicht auch die kontinuierliche Auswertung der indizierten Leistung, respektive des mittleren indizierten Druckes (Pₘᵢ) eines jeden Zylinders, wozu hohe Repetiergenauigkeit der einzelnen Sensoren sowie eine genaue Referenz zur Kolbenstellung nötig sind.

Um den Drucksensor vor hohen thermischen Belastungen zu schützen, ist es auch möglich, statt der erwähnten Auskleidung vorzusehen, das Volumen der zentralen Druckmessbohrung weitgehend mit einer hohlen Montageschraube auszufüllen, sodass zwischen diese Montageschraube und der Druckmessbohrung nur ein dünner Gasfilm einfliessen kann. Damit wird die in den Sensorkörper einströmende Wärmemenge stark verringert.

Die von der bereits kleinen Gasmenge erzeugte Wärmebelastung des C-Form Sensors lässt sich weiter reduzieren, wenn der Sensorkörper, in Verlängerung der zentralen Druckmessbohrung, einen hohlen Gewindebolzen aufweist, mit dem der Sensorkörper beispielsweise in den Zylinderdeckel einer Brennkraftmaschine eingeschraubt ist, oder wenn eine derartige Verbindung, beispielsweise zur Halterung des Drucksensors, zwischen der Montageschraube und dem Zylinderdeckel vorgesehen ist. Bei einer Brennkraftmaschine wird dadurch die Wärme der Verbrennungsgase aus dem Sensorkörper in den gekühlten Zylinderdeckel abgeleitet. Die Montageschraube, bzw. der Gewindebolzen werden damit zu einer relativ temperaturkonstanten und kühlen Wärmesenke, die die Gastemperaturschwankungen im C-Form Sensor in Grenzen hält. Die zentrale Montageschraube kann also gleichzeitig als Wärmeableit-, Montage- und Gasführungselement dienen. Die Halterung des Drucksensors mit Hilfe der Montageschraube bringt zusätzlich den Vorteil, dass der Drucksensor vor dem Festziehen der Montageschraube frei drehbar ist, was seine Montage erleichtert.

Eine Auswechslung des Drucksensors, beispielsweise während des Betriebes einer Brennkraftmaschine, wird ermöglicht - nach einem zusätzlichen Gedanken der Erfindung - wenn der Sensorkörper mit Hilfe einer separaten, auf den Gewindebolzen aufschraubbaren Mutter lösbar auf dem Zylinderdeckel gehalten ist, und wenn weiterhin die Gaszufuhr zu der zentralen Axialbohrung des Sensorkörpers innerhalb der Montageschraube, beispielsweise durch eine Ventilschraube, absperrbar ist.

Um das in der Tangentialbohrung angeordnete empfindliche Messelement vor Biegeeinflüssen infolge von Vibrationen zu schützen, ist es weiterhin vorteilhaft, im Sensorkörper, in Richtung der zentralen Axialbohrung gesehen, beidseits der Tangentialbohrung Entlastungsschlitze vorzusehen.

Die Erfindung soll anhand der folgenden Figuren erläutert werden:
Es zeigen:
- Fig. 1: Stand der Technik. Sensor montiert auf Indikatorventil
- Fig. 2: Handelsüblicher Plattenmembran-Sensor
- Fig. 3: Erfindungsgemässer C-Form Sensor im Schnitt von Fig. 4
- Fig. 4: Erfindungsgemässer C-Form Sensor im Schnitt von Fig. 3
- Fig. 5: Erfindungsgemässer C-Form Sensors mit vorgespanntem Dehnmesselement
- Fig. 6: Erfindungsgemässer C-Form Sensor für Kurzdehnelement
- Fig. 7: Erfindungsgemässer C-Form Sensor im Schnitt von Fig.8
- Fig. 8: Erfindungsgemässer C-Form Sensor im Schnitt von Fig. 7
- Fig. 9: C-Form Sensor isometrisch dargestellt
- Fig. 10: Anordnung auf Brennkraftmaschine
- Fig. 11: Anordnung auf Brennkraftmaschine
- Fig. 12: Erfindungsgemässer C-Form Sensor, Einspritzpumpen-Variante
- Fig. 13: Eine weitere Ausführungsform des C-Form Sensors auf einer Brennkraftmaschine
- Fig. 14: Eine weitere Ausführungsform des C-Form Sensors mit aufmontiertem Indikatorstutzen
- Fig. 15: Schnitt D-D von Fig. 14
- Fig. 16: Eine weitere Ausführungsform des C-Form Sensors auf einer Brennkraftmaschine

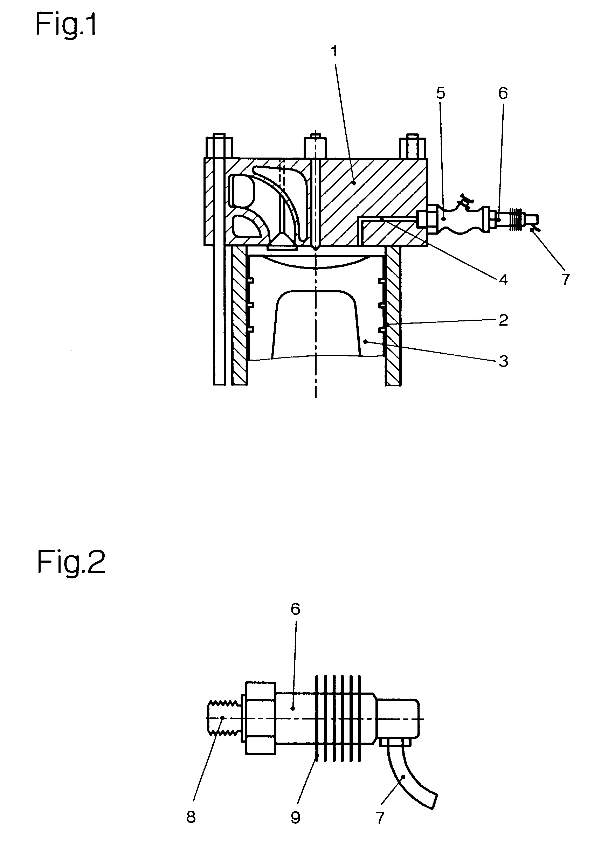

Fig. 1 zeigt, nach dem Stand der Technik, eine vereinfachte Montage eines Überwachungs-Sensors 6, der auf einem Absperrorgan, z.B. dem Indikator- oder Indizierventil 5 einer Brennkraftmaschine montiert und über den Druckkanal 4 mit dem Brennraum verbunden ist. Der Zylinder 2 umfasst Kolben 3. Der Drucksensor 6 weist eine nicht gezeigte Plattenmembran auf, welche via Durchbiegung die elektrischen Werte verstellt. Solche Drucksensoren sind in Fachschriften beschrieben.

Fig. 2 zeigt einen handelsüblichen Überwachungssensor 6 etwas deutlicher. Sein Volumen ist meist grösser als dasjenige des Indikatorventils 5, sodass sich durch die Einbaulänge meist ein schwingungsempfindliches Gebilde ergibt. Im normalen Messbetrieb ist das Indizierventil 5 geöffnet, womit der Drucksensor 6 unter normalem Betriebsdruck steht. In vielen Fällen werden die Drucksensoren 6 jedoch nur von Zeit zu Zeit eingeschaltet, um ihre Lebensdauer zu verbessern. Damit ist jedoch die Qualität der Überwachung wesentlich reduziert und eine Verstopfung des Druckkanals 4 jederzeit möglich. Durch Wiederöffnen des Indizierventils 5 kann diese Verstopfung nicht behoben werden, da kein Durchblasen erfolgt. Es bleibt deshalb nichts anderes als die Drucksensoren 6 periodisch auszubauen und die Indizierventile 5 durchblasen zu lassen. Bei Ausfall eines Drucksensors 6 ist das Indizierventil 5 wieder zu schliessen bis ein Reservesensor aufgebaut werden kann.

Es ist daraus ersichtlich, dass die heutigen Überwachungs-Anordnungen selber dauernd überwacht und bedient werden müssen, was deren Anwendbarkeit zweifelhaft erscheinen lässt.

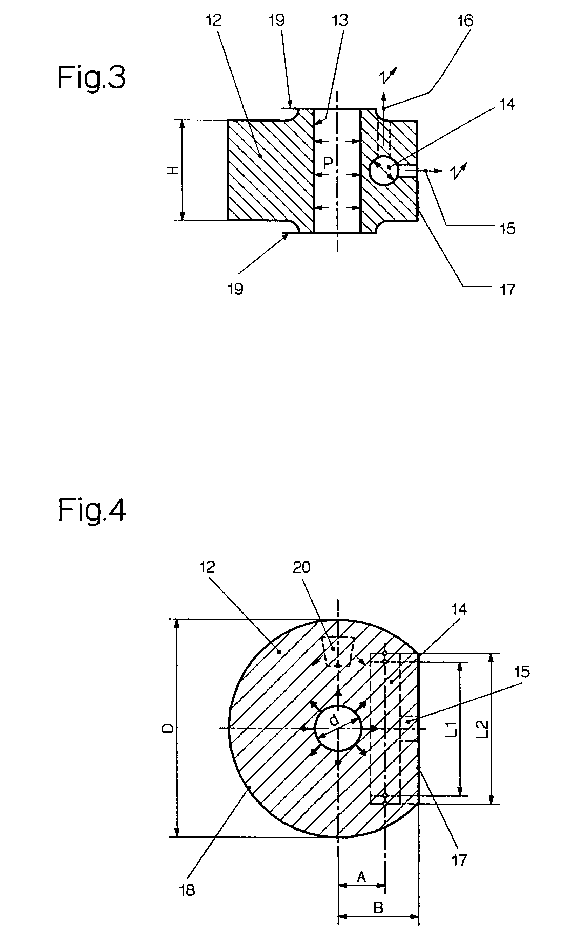

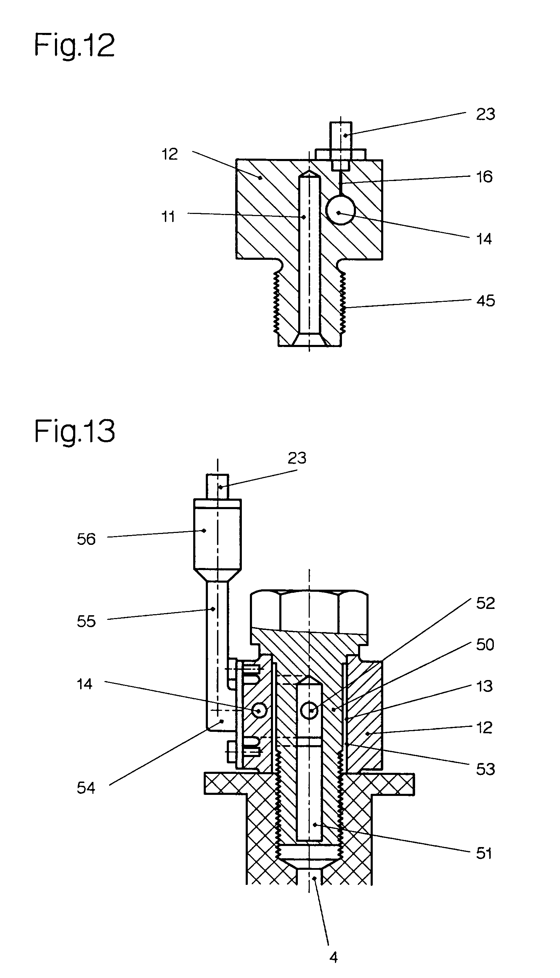

Fig. 3, 4, 5 und 6 zeigen das Grundprinzip des erfindungsgemässen C-Form Drucksensors. Fig. 3 zeigt den Schnitt im Aufriss von Fig. 4, welche den Grundriss von Fig. 3 darstellt. Der Sensorkörper 12 ist gekennzeichnet durch eine Scheibe mit kreisförmiger Mantelfläche 18, die durch eine Sekantenfläche 17 begrenzt ist. Stirnseitig sind die beiden Anflanschflächen 19. Die Druckmessbohrung 13, welche fliessendem oder stillstehendem Messmedium ausgesetzt wird, kann durchgehend oder als Sackloch 11 (Fig. 12) ausgebildet sein.

In Fig. 3, etwa in der Mitte der Höhe H, mit Abstand A (Fig. 4) vom Zentrum, ist eine Dehnmessbohrung 14 angeordnet, in welcher das Messelement 22 die Dehnung von L1 zu L2, die infolge des Messdruckes p entsteht, misst. Zur Abführung dieses Messignals kann eine Signalleitung mit Radialanschluss 15 oder mit Axialanschluss 16 vorgesehen werden. Das Teilchenelement 20 zeigt das Gleichgewicht zwischen den Radial- und Tangentialkräften an.

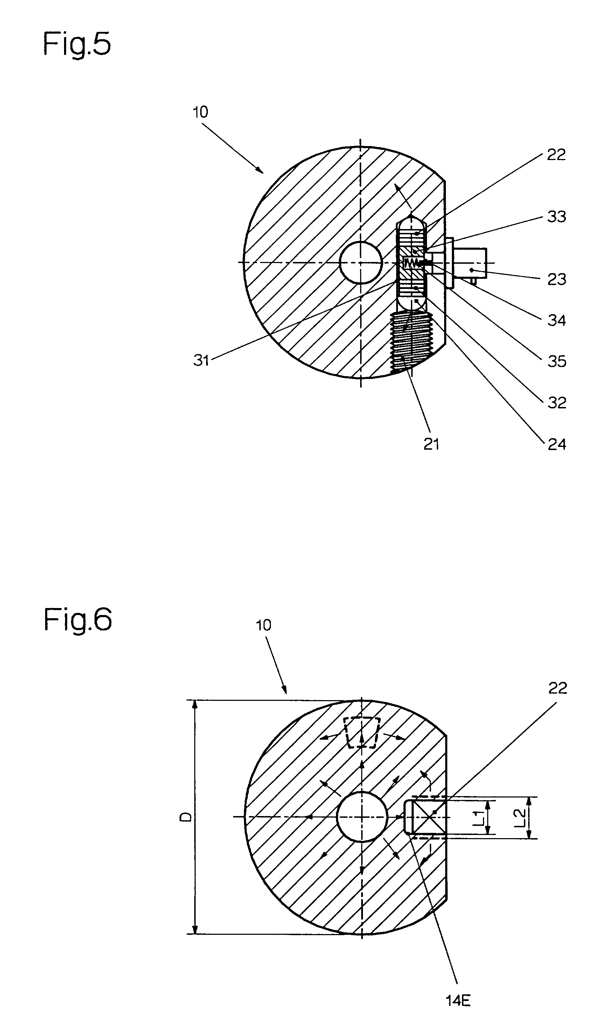

Fig. 5 zeigt ein Beispiel eines C-Form Sensors mit einem von einer Seite her eingebauten Dehnmesselement 22, das von einem Vorspannteil 21 unter Vorspannung gehalten ist. Der Stecker 23 nimmt das Messignal etwa in der Mitte des Dehnmesselements ab. Da sich die Dehnbewegung nicht genau in der Achse der Tangentialbohrung 14 auswirkt, ist ein- oder beidseitig des Dehnmesselements 22 eine Kugelabstützung 24 angebracht.

Bei dem als Beispiel gewählten piezoelektrischen Dehnelement 22, das bereits auf Nanometer-Längenänderungen anspricht, sind zwischen zwei Kraftübertragungsteilen mit den Kugelabstützungen 24 zwei nicht separat gezeigte Piezoscheiben so eingelegt, dass das gemeinsame Messsignal in einer Bohrung 35 mittels Kontaktfeder 34 abgenommen werden kann. Die Kontaktfeder 34 ist direkt mit dem Stecker 23 verbunden. Zwecks Isolation zwischen positiven und negativen Ladungen sind die Piezoscheiben mit dem Kontaktteil 33 in eine ebenfalls nicht dargestellte Isolierhülse eingebettet. Als Piezoscheiben eignen sich solche aus Quarz, oder aus einer Piezokeramik, wie sie handelsüblich sind. Es ist aber auch möglich nur eine Piezoscheibe, und anstelle der zweiten eine Isolationsscheibe, zu verwenden.

Es ist aber auch möglich ein Dehnmesselement 22 auf piezoresistiver, kapazitiver oder auf Dehnmessstreifenbasis zu bauen. Ein Dehnmesselement auf Basis der Mikrotechnik könnte wesentlich kürzer gebaut werden, sodass z.B. ein Einbau etwa nach Fig. 6 in Betracht gezogen werden kann. Bei einem sehr kurzen Element wirken die Dehnkräfte in einer Linie, sodass auf Kugelabstützung verzichtet werden kann.

Die gesamte Anordnung der Einzelteile wird mit einer nicht gezeigten unter Vorspannung gesetzten Vorspannhülse spaltfrei zusammengehalten, sodass das Dehnmesselement 22 einfach montierbar ist.

Fig. 6 zeigt eine Variante eines C-Form Sensors mit einem kurzen Dehnmesselement 22, das z.B. in einen seitlichen Einschnitt 14_{E} der Scheibe 12 eingepresst werden kann. Prinzipiell funktionieren beide Systeme gleich. Diese Form könnte sich z.B. für ein statisch messendes Siliziumelement auf kapazitiver oder piezoresistiver Basis eignen.

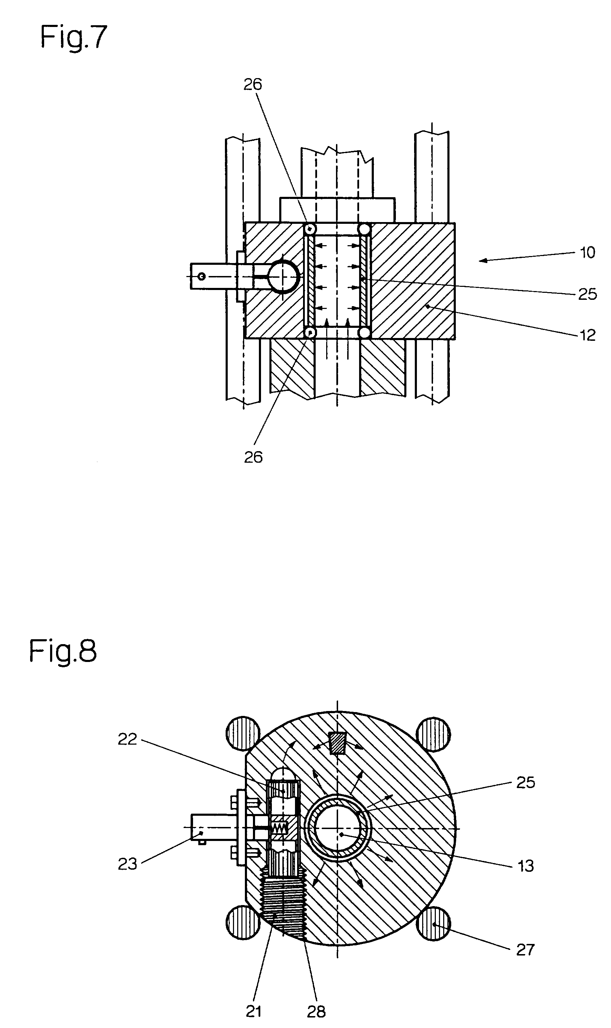

Fig. 7 und 8 zeigen eine weitere Variante von Fig. 3 und 4 für Anwendungen mit Verbrennungsgasen. Damit das Temperaturniveau des C-Form Sensors nicht unnötig hoch wird, ist eine Wärmeflussbarriere in Form einer rohrförmigen Auskleidung 25 in die Druckmessbohrung 13 eingesetzt. Mittels spezieller Bearbeitung kann die Kontaktfläche der Auskleidung 25 gegen die Druckmessbohrung 13 auf ein Minimum gebracht werden, was eine erhebliche Reduktion des Wärmeübergangs bewirkt. Es ist aber auch möglich, eine mehrteilige Auskleidung 25 zu verwenden, die aus ineinandergesteckten Rohren besteht. Eine Mehrschichtenkonstruktion, z.B. eine aussen keramisierte Membran 25, würde den Wärmefluss ebenfalls erheblich reduzieren. Die Auskleidung 25 kann an beiden Enden mit Abdichtteilen 26 versehen sein, die z.B. als metallische "O"-Ringe ausgebildet sein können.

Der Stecker 23 kann im Fall eines piezoelektrischen Dehnmesselements 22 direkt mit Kontaktfeder in den Kontaktteil 33 (Fig. 5) eingreifen. Zur Montage des C-Form Drucksensors können verschiedene Mittel verwendet werden, wie z.B. durch Verschraubungsteile 27 angedeutet. Zur Abdichtung des Vorspannteils 21 empfiehlt sich Verschweissung 28.

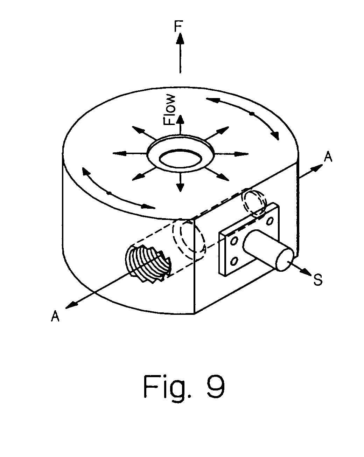

Fig. 9 zeigt das C-Sensorprinzip isometrisch dargestellt mit den 3 Hauptachsen, die jeweils senkrecht aufeinander sind. Die F-Achse deutet die Flussrichtung des Messmediums an. Die A-Achse gibt die Lage der Messdehnung und die S-Achse gibt die generelle Richtung der Signalabgabe an.

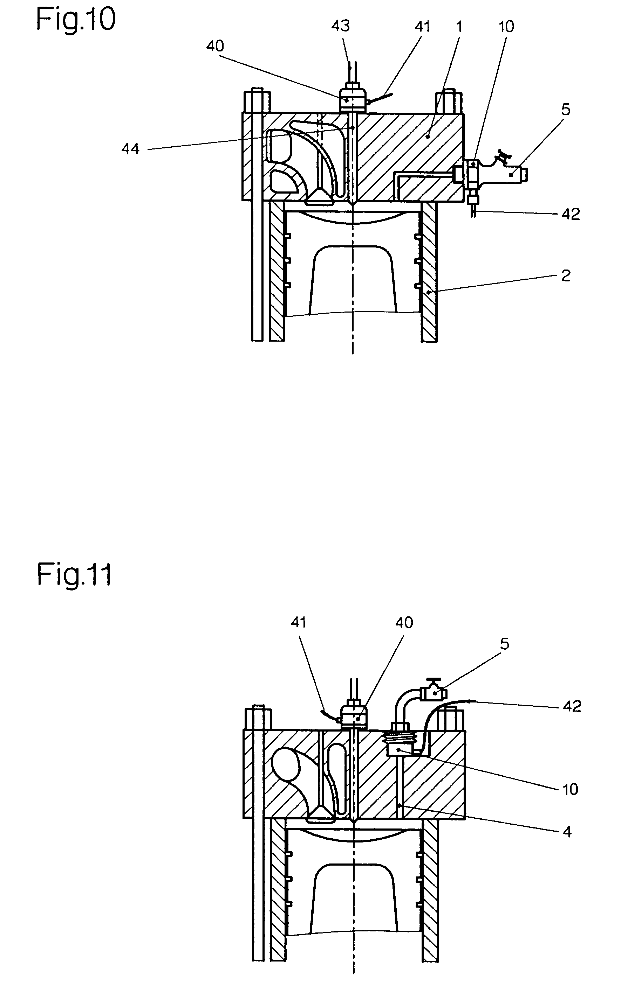

Fig. 10 zeigt schematisch eine mögliche Anordnung des erfindungsgemässen C-Form Drucksensors 10, montiert an den Zylinderdeckel 1. Das Indizierventil 5 ist direkt an den C-Form Drucksensor 10 angeflanscht, mit Mitteln, die nicht angedeutet sind. Selbstverständlich ist es auch möglich, den C-Form Drucksensor 10 in das Indizierventil 5 zu integrieren, d.h. beide in **einem** Bauelement zu vereinen; dies ist besonders für eine Nachrüstung bereits imbetriebstehender Motoren von Vorteil. Mit dem Handrad des Indizierventils 5 kann der Druckkanal 4 und die Auskleidung 25 (Fig. 8) periodisch durchgeblasen werden, wodurch allfällige Rückstände entfernt werden. Auf dem Einspritzdüsenhalter 44 ist zur Messung des Einspritzdruckes ein C-Form Sensor 40 gemäss Fig. 3 und 4, also mit einer Durchgangsbohrung 13 für das Brennöl oder -gas, vorgesehen.

Fig. 11 zeigt schematisch eine weitere mögliche Anordnung, bei welcher der C-Form Drucksensor 10 möglichst nahe am Brennraum montiert ist, um einen kurzen Druckkanal 4 zu realisieren. Das Indizierventil 5 ist an servicefreundlicher Lage montiert, am Ende einer Verbindungsleitung, sodass der C-Form Drucksensor 10 zwischen Brennraum und Indizierventil 5 plaziert ist. Nochmals ist ferner ein C-Form Sensor 40 für Einspritzdruck angedeutet.

Fig. 12 zeigt eine mögliche Variante eines C-Form Sensors für Einspritzdruck mit Sackloch 11 statt Durchgangs-Druckmessbohrung 13. Das Funktionsprinzip ist jedoch dasselbe wie in Fig. 3 und 4 gezeigt. Im Fall von Dieselöl oder komprimiertem Brenngas kann die Druckmessbohrung 13, respektive das Sackloch 11 direkt, also ohne Auskleidung 25 oder Montageschraube (63) (Fig. 19), verwendet werden. Der Stecker 23 kann radial oder axial aufgebracht sein.

Bei dem C-Form Drucksensor 10 der Ausführungsform nach Fig. 13 ist der Sensorkörper 12 von einer Montageschraube 50 durchsetzt und gehaltert, wodurch der C-Form Sensor 10 in den Zylinderdeckel 1 einer Brennkraftmaschine eingeschraubt wird.

Da der Zylinderdeckel 1 der Brennkraftmaschine gekühlt wird, kann über die Montageschraube 50 die von heissen Verbrennungsgasen in den Sensorkörper 12 eingeleitete Wärme rasch abfliessen, und damit den C-Form Sensor 10 relativ kühl gehalten werden.

Mit einer weiteren erfindungsgemässen Massnahme wird der heisse Gasstrom vom Druckkanal 4 über die Zuleitungsbohrung 51 und Querbohrung 52 zum Druckwirkraum 53 geleitet, der nur einen dünnwandigen Heissgasfilm zulässt, welcher wenig Wärmeenergie mit sich führt. Durch die im wassergekühlten Zylinderdeckel befestigte Montageschraube 50 entsteht gegenüber der Wand der Druckmessbohrung 19 eine Kühlfläche mit ähnlicher Wirkung wie die Auskleidung 25 Fig. 7 und 8. Die Montageschraube 50 stellt damit eine wirkungsvolle Variante zu Auskleidungsbüchsen 25 dar.

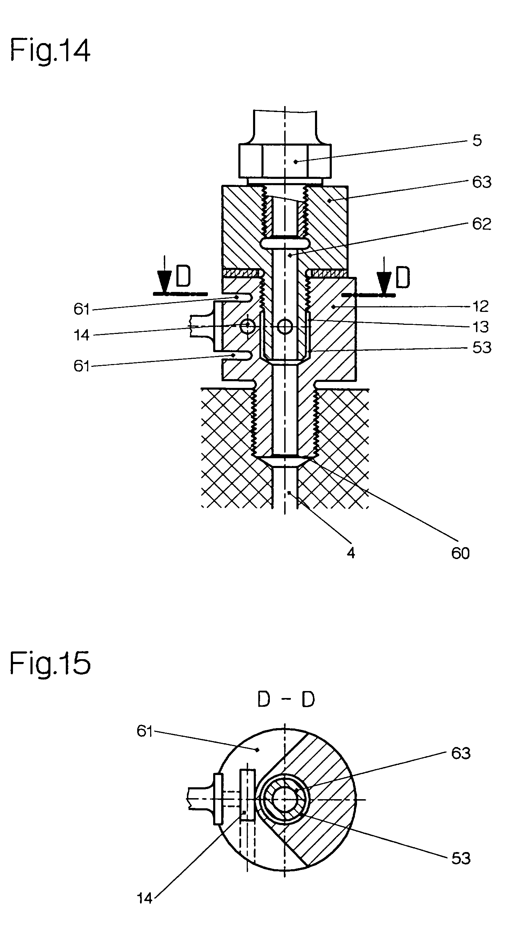

Fig. 14 stellt eine weitere Variante von Fig. 12 und Fig. 13 dar, wobei die Anschlussschraube 63 wiederum einen eng begrenzten Druckwirkraum 53 definiert und ihrerseits Wärme an die luftgekühlten Teile des Indizierventils 5 ableitet. Zusätzliche Wärmeableitung vom Sensorkörper 12 in den gekühlten Zylinderdeckel 1 wird über die Dichtfläche 60 möglich. Damit allfällige Störkräfte infolge von Biegeschwingungen des Systems 63 und 5 von der Dehnmessbohrung 14 isoliert werden, sind beidseitig derselben Entlastungsschlitze 61 vorgesehen.

Fig. 15 zeigt die Anordnung der Entlastungsschlitze 61 beidseits der Dehnmessbohrung 14.

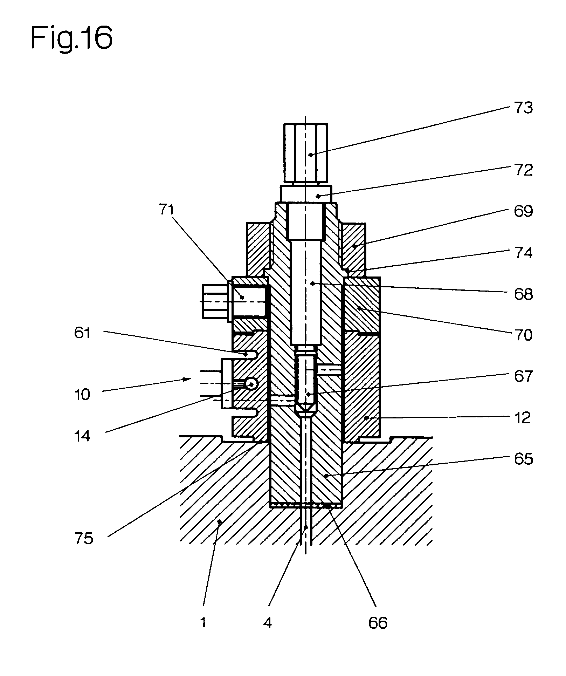

Fig. 16 zeigt eine weitere erfindungsgemässe Kombination, welche eine weitere Optimierung des Grundkonzeptes ermöglicht. Der Schraubbolzen 65 ist fest in den Zylinderdeckel 1 eingeschraubt und enthält ein integriertes Indizierventil, gekennzeichnet durch Ventilteil 67 und Schraubteil 68, wodurch sich mittels Verstellschraube 73 und Feststellteil 72 der Druckkanal 4 öffnen oder schliessen lässt. Oberhalb des Sensorkörpers 12 ist ein Kalibrierkörper 70 angebracht, der mittels Gewindestopfen 71 abgedichtet ist. Dieser kann bei geschlossenem Ventilteil 67 entfernt werden und an dessen Stelle wird ein Kalibriersensor 6 eingebaut. Damit kann der C-Form Sensor 10 jederzeit ohne Betriebsunterbruch kalibriert werden.

Die Anordnung ist jedoch auch ohne den zusätzlichen Kalibrierkörper 70 denkbar. Sowohl Sensorkörper 12 wie Kalibrierkörper 70 werden mit Mutter 69 auf die Dichtfläche 75 gepresst, wobei die Signalabnahmen jeweils in die beste Position gedreht werden können. Der Dichtring 74 hat eine Doppelfunktion. Es ist aber auch möglich, anstelle eines Schraubbolzens 65 eine Montageschraube 50 zu verwenden, wobei dann das Dichtelement 66 entfällt.

Die Anordnung nach Fig. 16 kombiniert somit die in den Grundfiguren 1 bis 11 aufgezeigten Möglichkeiten, indem das Indizierventil 5 und der Kalibriersensoranschluss 6 integriert wurden, wodurch Durchspülen des C-Form Sensors zu Reinigungszwecken wie auch Durchführung von Kalibriermessungen jederzeit ohne Betriebsunterbruch möglich wird.

Der erfindungsgemässe C-Form Drucksensor, der sowohl für Flüssigkeiten wie für Gase eingesetzt werden kann, ermöglicht im Falle der Anwendung auf Brennkraftmaschinen erstmals eine Dauerüberwachung der relevanten Parameter. Die Möglichkeit, die Signalübertragung durch Reinigung des Druckkanals 4 und der Druckmessbohrung 13 mittels periodischen Durchblasens konstant zu halten und die in situ Kalibriermöglichkeiten ergeben eine neue Betriebssicherheit, die bis anhin nicht realisierbar war. Auch die erfindungsgemässe Anwendung der C-Form auf Einspritzvorgänge für Öle oder Brenngase sowie die immer höheren Spitzendruck-Anwendungen, gestatten, infolge des indirekten Messprinzips, eine bis anhin unbekannte Betriebssicherheit. Die C-Form Sensorik erbringt damit bedeutende Fortschritte, insbesondere in der Überwachung von Brennkraftmaschinen.

### Figuren und Bezeichnungen:

- Fig. 1: 1 Zylinderdeckel
2 Zylinder
3 Kolben
4 Druckkanal
5 Absperrmittel, z.B. Indizierventil
6 Drucksensor, Klibriersensor
7 Anschluss

- Fig. 2: 8 Montagegewinde
9 Kühlflächen

- Fig. 3: 12 Sensorkörper
13 Druckmessbohrung
14 Dehnmessbohrung
15 Signalleitung radial angeschlossen
16 Signalleitung axial angeschlossen
17 Sekantenfläche
19 Anflanschflächen

- Fig. 4: 18 Kreisfläche
20 Teilchen Element

- Fig. 5: 10 C-Form Drucksensor
21 Vorspannteil
22 Dehnmesselement
23 Stecker
24 Kugelabstützung
31 Vorspannhülse
32 Piezoscheibe
33 Kontaktteil
34 Kontaktfeder
35 Kontaktbohrung

- Fig. 6: 14_{E} Dehnmesseinschnitt

- Fig. 7: 25 Auskleidung
26 Abdichtteil

- Fig. 8: 27 Verschraubungsteile
28 Verschweissung

- Fig. 10: 40 C-Form Sensor für Einspritzdruck

- Fig. 11: 41 Anschlusskabel Einspritzdruck
42 Anschlusskabel Zylinderdruck
43 Einspritzleitung
44 Einspritzdüsenhalter

- Fig. 12: 45 Montagegewinde
11 Sacklochbohrung

- Fig. 13: 50 Montageschraube
51 Zuleitungsbohrung
52 Querbohrung
53 Druckwirkraum
54 Anschlussflansch
55 Signalleitung
56 Impedanzwandler

- Fig. 14: 60 Dichtfläche
61 Entlastungsschlitz
62 Durchgangsbohrung
63 Anschlussschraube

- Fig. 16: 65 Schraubbolzen
66 Dichtelement
67 Ventilteil
68 Schraubteil
69 Mutter
70 Kalibrierkörper
71 Gewindestopfen
72 Feststellteil
73 Verstellschraube
74 Dichtring
75 Dichtfläche

## Patentansprüche

1. Drucksensor für flüssige oder gasförmige Medien, insbesondere für die Überwachung von Brennkraftmaschinen, beispielsweise Diesel- und Gasmotoren, mit einem hauptsächlich scheibenförmigen Sensorkörper (12), der eine zentrale Druckmessbohrung (13) für das zu messende Medium und eine dazu mit ihrer Achse um 90° gedrehte Tangentialbohrung (14) für die Aufnahme eines Dehnmesselementes (22) aufweist, dadurch gekennzeichnet, dass der Scheibenkörper (12) C-förmig ausgebildet ist, und die Tangentialbohrung (14) als Dehnmessbohrung parallel zur Sekante (17) ausgebildet ist.

2. Drucksensor nach Anspruch 1, dadurch gekennzeichnet, dass in die Druckmessbohrung (13) spielfrei eine rohrförmige Auskleidung (25) eingebaut ist, zwecks Reduktion der Wärmeübertragung.

3. Drucksensor nach Ansprüchen 1 und 2, dadurch gekennzeichnet, dass die Auskleidung (25) an der Aussenfläche so bearbeitet ist, z.B. durch spezielle Drehriefen, dass nur eine Teilfläche derselben Wandberührung hat, wodurch eine Wärmebarriere entsteht.

4. Drucksensor nach Ansprüchen 1, 2 und 3, dadurch gekennzeichnet, dass die Auskleidung (25) aus einer Stahlhülse besteht, die aussen mit Isolierbelag, z.B. Keramik, belegt ist, um einen möglichst geringen Wärmefluss zu erreichen.

5. Drucksensor nach Ansprüchen 1 bis 4, dadurch gekennzeichnet, dass in der Dehnmessbohrung (14) ein Dehnmesselement (22) unter hoher mechanischer Vorspannung eingebaut ist, dessen Messignal vorzugsweise etwa in der Mitte durch eine Radialbohrung (15) oder durch eine Axialbohrung (16) abgenommen und von einem Stecker (23) übernommen wird.

6. Drucksensor nach Ansprüchen 1 bis 5, dadurch gekennzeichnet, dass anstelle der Tangentialbohrung ein Tangential-Einschnitt (14_{E}) für ein kurzes Dehnmesselement (22) angeordnet ist.

7. Drucksensor nach Ansprüchen 1 bis 6, dadurch gekennzeichnet, dass im Scheibenkörper (12) anstelle der Durchgangsbohrung (13) eine Sacklochbohrung (11) vorgesehen ist.

8. Drucksensor nach einem der Ansprüche 1 bis 7, dadurch gekennzeichnet, dass das Dehnmesselement (22) auf piezoelektrischer Basis beruht und mindestens eine Piezoplatte (32) und ein Kontaktteil (33) aufweist und mit einer Vorspannhülse (31), die alle Teile umfasst und so unter Vorspannung setzt, dass keine Spaltflächen entstehen, wobei die Auflageflächen (24) kugelig oder planflächig ausgebildet sein können.

9. Drucksensor nach Ansprüchen 1 bis 8, dadurch gekennzeichnet, dass die Piezoplatten (32) des Dehnmesselements (22) aus Piezokeramik bestehen.

10. Drucksensor nach Ansprüchen 1 bis 8, dadurch gekennzeichnet, dass die Piezoplatten (32) des Dehnmesselements (22) aus einem Einkristall, z.B. Quarz oder einem ähnlichen Einkristall bestehen.

11. Drucksensor nach Ansprüchen 1 bis 8, dadurch gekennzeichnet, dass ein statisch messendes Dehnmesselement, basierend auf piezoresistiven Siliziumkristallen, auf Dünnfilmtechnik oder auf kapazitiver Technik angewendet wird.

12. Drucksensor nach einem der Ansprüche 1 bis 11, dadurch gekennzeichnet, dass im Sensorkörper (12), in Richtung der zentralen Druckmessbohrung (13) gesehen, beidseits der Dehnmessbohrung (14) Entlastungsschlitze (61) vorgesehen sind.

13. Drucksensor nach einem der Ansprüche 1 bis 12, dadurch gekennzeichnet, dass der Sensorkörper (12) in der zentralen Druckmessbohrung (13) einen hohlen Gewindebolzen (50) aufweist, mit dem der Sensorkörper (12) auf einen Behälter für das zu messende Medium, beispielsweise auf den Zylinderdeckel (1) einer Brennkraftmaschine, geschraubt ist (Fig. 13).

14. Drucksensor nach einem der Ansprüche 1 bis 12, dadurch gekennzeichnet, dass der Sensorkörper (12) mit einem Montagegewinde (45) zum Einschrauben in einen Behälter für das zu messende Medium, beispielsweise in den Zylinderdeckel (1) einer Brennkraftmaschine, versehen ist, und ferner in seine zentrale Druckmessbohrung (13) eine hohle Anschluss-Schraube (63) eingesetzt ist (Fig. 14).

15. Drucksensor nach einem der Ansprüche 1 bis 12, dadurch gekennzeichnet, dass der Sensorkörper (12) mit Hilfe einer auf einen, in die zentrale Druckmessbohrung (13) eingesetzten Schraubbolzen (65), aufschraubbaren Mutter (69) lösbar auf dem Behälter, bzw. Zylinderdeckel (1) gehalten ist.

16. Drucksensor nach Anspruch 15, dadurch gekennzeichnet, dass die Mediumzufuhr zu der zentralen Druckmessbohrung (13) des Sensorkörpers (12) innerhalb des Schraubenbolzens (65) absperrbar ist.

17. Anordnung zur Überwachung eines Zylinders mit Indizierventil einer Brennkraftmaschine, gekennzeichnet durch den Einbau des C-Form Sensors zwischen Brennraum und Indizierventil (5), wodurch periodische Durchspülung der zentralen Druckmessbohrung (13) sowie Kontroll-Kalibrierung mit Kalibriersensor (6) während des Betriebes möglich sind.

18. Anordnung zur Überwachung von Brennkraftmaschinen, dadurch gekennzeichnet, dass der Verbrennungsdruck mit einem C-Form Sensor (10) mit Auskleidung (25) und die Einspritzdrücke, mit einem C-Form Sensor mit zentraler Druckmessbohrung (13) oder mit Montageschraube oder Sacklochbohrung (11), gemessen wird.
